**Europäisches Patentamt**

**European Patent Office**

**Office européen des brevets**

(19)

(11)  **EP 1 538 505 A1**

(12)  **EUROPÄISCHE PATENTANMELDUNG**

(43)  Veröffentlichungstag:
  **08.06.2005  Patentblatt 2005/23**

(51)  Int Cl.$^7$: **G05D 1/02**, B60K 31/00

(21)  Anmeldenummer: **04105176.4**

(22)  Anmeldetag: **20.10.2004**

(84)  Benannte Vertragsstaaten:
  **AT BE BG CH CY CZ DE DK EE ES FI FR GB GR
  HU IE IT LI LU MC NL PL PT RO SE SI SK TR**
  Benannte Erstreckungsstaaten:
  **AL HR LT LV MK**

(30)  Priorität: **05.12.2003  DE 10356860**

(71)  Anmelder: **SIEMENS AKTIENGESELLSCHAFT**
  **80333 München (DE)**

(72)  Erfinder: **Nelles, Oliver**
  **93055, Regensburg (DE)**

(54)  **Verfahren und System zur zuverlässigkeitsabhängigen Aktivierung/Deaktivierung von Funktionen**

(57)  Ein Signal oder eine Information kann vielfach nur dann sinnvoll verwertet werden, wenn dessen/deren Zuverlässigkeit bekannt ist. Beispielsweise sollten sicherheitskritische Funktionen, wie die Steuerung/Regelung des Antriebsstranges eines Kraftfahrzeugs, nur aufgrund sehr sicherer Informationen aktiv werden.

Erfindungsgemäß ist daher vorgesehen, eine Funktion nur dann zu aktivieren/deaktivieren wenn der zu erwartende Gesamtnutzen $N_{ges}$ größer als Null ist. Der Gasamtnutzen wird dabei über den folgenden Zusammenhang ermittelt:

$$N_{ges} = P \times N_{Signal\ ok} + (1-P) \times N_{Signal\ nicht\ ok},$$

wobei $0 \leq p \leq 1$ die abgeschätzte Wahrscheinlichkeit dafür ist, dass das verwendete Signal korrekt ist, $N_{Signal\ ok} > 0$ der Nutzen durch die aktivierte korrekt funktionierende Funktion ist und $N_{Signal\ nicht\ ok} < 0$ der Schaden durch die fehlerhaft arbeitende Funktion ist.

FIG 2

**Beschreibung**

Verfahren und System zur zuverlässigkeitsabhängigen Aktivierung/Deaktivierung von Funktionen

Die Erfindung betrifft ein Verfahren und ein System zum Aktivieren/Deaktivieren einer Funktion, insbesondere einer Funktion eines Antriebsstranges eines Kraftfahrzeuges, in Abhängigkeit von zumindest einem Signal, insbesondere einem von einem Navigationssystem gelieferten Signal.

Beispielsweise im Zusammenhang mit der Kraftfahrzeugtechnik werden immer mehr Informationsquellen zur Verbesserung und Erweiterung bestehender Funktionen sowie zur Schaffung vollständig neuer Funktionalitäten bereitgestellt. Zum einen nimmt in diesem Zusammenhang die Anzahl an verwendeten Sensoren stetig zu. Zum anderen kommen zunehmend vollständig neue Systeme zum Einsatz, beispielsweise GPS- und Karten-basierte Navigationssysteme. Da die Bereitstellung der in diesem Zusammenhang erforderlichen Signale einen hohen Aufwand verursacht, ist eine möglichst breite Verwendung dieser Signale anzustreben. Zu diesem Zweck findet eine zunehmende Vernetzung beispielsweise von Steuergeräten und Bussystemen statt. Ein in diesem Zusammenhang auftretendes Problem besteht darin, dass die automatische Aktivierung/Deaktivierung einer Funktion, beispielsweise einer Funktion eines Antriebsstranges eines Kraftfahrzeugs, sich dann nachteilig auswirken kann, wenn die Entscheidung zur Aktivierung/Deaktivierung der Funktion auf der Grundlage von Informationen in Form von Signalzuständen getroffen wird, die die Realität nicht hinreichend genau abbilden.

Der Erfindung liegt die Aufgabe zugrunde, die Wahrscheinlichkeit für eine nachteilige Aktivierung/Deaktivierung einer Funktion, insbesondere einer Funktion eines Antriebsstranges eines Kraftfahrzeugs, in Abhängigkeit von zumindest einem Signal, insbesondere einem von einem Navigationssystem gelieferten Signal, zu verringern.

Diese Aufgabe wird durch die Merkmale der unabhängigen Ansprüche gelöst.

Vorteilhafte Ausführungsformen und Weiterbildungen der Erfindung ergeben sich aus den abhängigen Ansprüchen.

Das erfindungsgemäße Verfahren baut auf dem gattungsgemäßen Stand der Technik dadurch auf, dass es die folgenden Schritte umfasst:

a) Bestimmen der Zuverlässigkeit des Signals und/oder einer Untermenge des Signals;

b) Bestimmen eines bei der Aktivierung der Funktion zu erwartenden Gesamtnutzens in Abhängigkeit von der Zuverlässigkeit des Signals oder der Untermenge des Signals; und

c) Aktivieren/Deaktivieren der Funktion nur dann, wenn der zu erwartende Gesamtnutzen größer als ein vorgegebener Schwellenwert ist, insbesondere größer als Null.

Diese Lösung ermöglicht eine optimale Ausnutzung der Signalinformationen. Dabei kann beispielsweise jede Einzelkomponente (zum Beispiel jedes Steuergerät) oder sogar jede einzelne Funktion den Kosten und Nutzen der Verwendung bestimmter Signale individuell abwägen. Die Zuverlässigkeit des Signals beziehungsweise der Untermenge des Signals liegt dabei in einem Wertbereich zwischen Null und Eins beziehungsweise zwischen null und einhundert Prozent.

Bei dem erfindungsgemäßen Verfahren ist vorzugsweise weiterhin vorgesehen, dass in die Bestimmung der Zuverlässigkeit des Signals die Zuverlässigkeit zumindest von Abschnitten des Übertragungsweges von der Quelle des Signals bis zum Auswertungsort eingeht. In diesem Zusammenhang kann beispielsweise eine Kabelbruchwahrscheinlichkeit, eine Bus-Übertragungssicherheit usw. in die Zuverlässigkeitsbestimmung eingehen.

Bei besonders bevorzugter Ausführungsform des erfindungsgemäßen Verfahrens ist vorgesehen, dass der Gesamtnutzen über den folgenden Zusammenhang bestimmt wird:

$$N_{ges} = p \times N_{Signal\ ok} + (1-p) \times N_{Signal\ nicht\ ok},$$

wobei $N_{ges}$ der Gesamtnutzen, p die Zuverlässigkeit des Signals oder der Untermenge des Signals, $N_{Signal\ ok}$ ein Maß für einen mit der zu Recht ausgelösten Funktion verbundenen Nutzen und $N_{Signal\ nicht\ ok}$ ein Maß für einen mit der zu Unrecht ausgelösten Funktion verbundenen Schaden ist. Die Werte für den Nutzen $N_{Signal\ ok}$ sind dabei positiv, während die Werte für den Schaden $N_{Signal\ nicht\ ok}$ negativ sind. In diesem Zusammenhang wird noch darauf hingewiesen, dass die optimale Entscheidung (Funktion aktivieren/deaktivieren) nach dem angegebenen Zusammenhang zwar objektiv ist, dennoch aber anwendungsabhängige subjektive Risikoeinschätzungen in die Abschätzung des Nutzens (Signal OK/Signal nicht OK) eingehen und damit die Entscheidung beeinflussen können.

In diesem Zusammenhang wird für das erfindungsgemäße Verfahren insbesondere weiterhin bevorzugt, dass der Nutzen und/oder der Schaden situations- und/oder signalabhängig bestimmt wird.

Bei bestimmten Ausführungsformen des erfindungsgemäßen Verfahrens kann vorgesehen sein, dass die Zuverlässigkeit p ein Produkt aus Einzelzuverlässigkeiten einer Mehrzahl von Signalen ist. Diese Lösung ist für Fälle geeignet, bei denen eine Funktion entscheidend von mehreren Signalen abhängt, da in diesem Fall die Einzelzuverlässigkeiten in geeigneter Weise kombiniert werden müssen. Typischerweise funktioniert eine Funktion nur dann korrekt, wenn alle beteilig-

ten Signale zumindest annähernd korrekt sind. Ähnliches gilt im Übrigen für die Erzeugung eines neuen Signals aus einer UND-Verknüpfung verschiedener Signale. Ebenso kann mit ähnlichen wahrscheinlichkeitstheoretischen Überlegungen eine so genannte Sensor-Fusion berücksichtigt werden, dass heißt eine Kombination zumindest teilweise redudanter verschiedener Sensorsignale zur möglichst zuverlässigen Bestimmung eines Ersatzsignals. Als Beispiel kann in diesem Zusammenhang die Kombination aus Raddrehzahlsignalen, einem Getriebeabtriebsdrehzahlsignal und einem GPS-Signal zur Erzeugung eines Geschwindigkeitssignals genannt werden. Es ist nachvollziehbar, dass durch eine Sensor-Fusion die Zuverlässigkeit eines Signals gesteigert werden kann.

Bei besonders bevorzugten Ausführungsformen des erfindungsgemäßen Verfahrens ist weiterhin vorgesehen, dass die Zuverlässigkeit mit dem Signal übertragen wird. Diese Lösung ist insbesondere vorteilhaft, wenn ein und dasselbe Signal in die Aktivierung/ Deaktivierung mehrerer Funktionen eingeht, für die jeweils eine getrennte Abschätzung des Nutzens und Schadens vorgenommen wird.

Das erfindungsgemäße System baut auf dem gattungsgemäßen Stand der Technik dadurch auf, dass es die folgenden Bestandteile umfasst:

- erste Mittel zum Bestimmen der Zuverlässigkeit des Signals und/oder einer Untermenge des Signals;

- zweite Mittel zum Bestimmen eines bei der Aktivierung der Funktion zu erwartenden Gesamtnutzens in Abhängigkeit von der Zuverlässigkeit des Signals oder der Untermenge des Signals; und

- dritte Mittel zum Aktivieren/Deaktivieren der Funktion nur dann, wenn der zu erwartende Gesamtnutzen größer als ein vorgegebener Schwellenwert ist, insbesondere größer als Null.

Dabei ergeben sich die im Zusammenhang mit dem erfindungsgemäßen Verfahren erläuterten Eigenschaften und Vorteile in gleicher oder ähnlicher Weise, weshalb zur Vermeidung von Wiederholungen auf die entsprechenden Ausführungen im Zusammenhang mit dem erfindungsgemäßen Verfahren verwiesen wird.

Gleiches gilt sinngemäß für die folgenden bevorzugten Ausführungsformen des erfindungsgemäßen Systems, wobei hinsichtlich der jeweiligen Vorteile und Eigenschaften auch in diesem Zusammenhang auf die entsprechenden Ausführungen im Zusammenhang mit dem erfindungsgemäßen Verfahren verwiesen wird.

Für das erfindungsgemäße System wird bevorzugt, dass die ersten Mittel bei der Bestimmung der Zuverlässigkeit des Signals die Zuverlässigkeit zumindest von Abschnitten des Übertragungsweges von der Quelle des Signals bis zum Auswertungsort berücksichtigen.

Bei bevorzugten Ausführungsformen des erfindungsgemäßen Systems ist weiterhin vorgesehen, dass die zweiten Mittel den Gesamtnutzen über den folgenden Zusammenhang bestimmen:

$$N_{ges} = P \times N_{Signal\ ok} + (1\text{-}p) \times N_{Signal\ nicht\ ok},$$

wobei $N_{ges}$ der Gesamtnutzen, p die Zuverlässigkeit des Signals oder der Untermenge des Signals, $N_{signal\ ok}$ ein Maß für einen mit der zu Recht ausgelösten Funktion verbundenen Nutzen und $N_{Signal\ nicht\ ok}$ ein Maß für einen mit der zu Unrecht ausgelösten Funktion verbundenen Schaden ist.

Darüber hinaus wird bevorzugt, dass vierte Mittel vorgesehen sind, die den Nutzen und/oder den Schaden situationsund/oder signalabhängig bestimmen.

Ähnlich wie bei dem erfindungsgemäßen Verfahren kommen auch bei dem erfindungsgemäßen System Ausführungsformen in betracht, bei denen vorgesehen ist, dass die Zuverlässigkeit ein Produkt aus Einzelzuverlässigkeiten einer Mehrzahl von Signalen ist.

Für das erfindungsgemäße System wird es weiterhin als vorteilhaft erachtet, dass die Zuverlässigkeit mit dem Signal übertragen wird.

Ein Grundgedanke der Erfindung besteht darin, dass ein Signal oder eine Information vielfach nur dann sinnvoll verwertet werden kann, wenn dessen/deren Zuverlässigkeit bekannt ist. Es ist beispielsweise nachvollziehbar, dass sicherheitskritische Funktionen nur aufgrund sehr sicherer Informationen aktiv werden sollten. Im Allgemeinen sollte eine bestimmte Funktionalität, die auf zumindest einem bestimmten Signal beruht, nur dann aktiv werden, wenn der zu erwartende Gesamtnutzen positiv ist.

Die Erfindung wird nun unter Bezugnahme auf die beigefügten Zeichnungen anhand bevorzugter Ausführungsform beispielhaft erläutert.

Es zeigen:

Figur 1   ein Flussdiagramm, das eine Ausführungsform des erfindungsgemäßen Systems veranschaulicht, und

Figur 2   ein schematisches Blockschaltbild einer Ausführungsform des erfindungsgemäßen Systems.

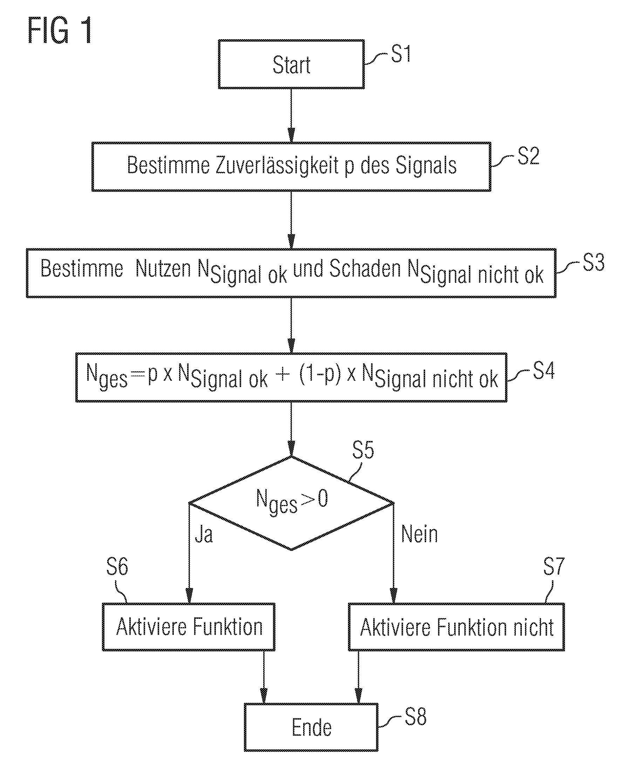

Figur 1 zeigt ein Flussdiagramm einer Ausführungsform des erfindungsgemäßen Verfahrens.

Das dargestellte Verfahren beginnt beim Schritt S1.

Im Schritt S2 wird die Zuverlässigkeit p des Signals bestimmt oder abgeschätzt. Dabei wird neben der Zuverlässigkeit des Ursprungssignals selbst auch die Zuverlässigkeit der Kommunikationskanäle berücksichtigt, über die das Signal von dessen Quelle zur Funktionsbearbeitung übertragen werden muss, beispielsweise um eine Kabelbruchwahrscheinlichkeit oder eine Bus-Übertragungssicherheit zu berücksichtigen.

Im Schritt S3 wird der Nutzen $N_{Signal\ ok}$ und der Schaden $N_{Signal\ nicht\ ok}$ bestimmt. Der Nutzen $N_{Signal\ ok}$ durch die aktivierte, korrekt funktionierende Funktion wird dabei durch einen Wert dargestellt, der größer als Null ist. Entsprechend wird der Schaden $N_{Signal\ nicht\ ok}$, durch die fehlerhaft arbeitende Funktion durch einen Wert angegeben, der kleiner als Null ist. Sowohl der Nutzen $N_{Signal\ ok}$ als auch der Schaden $N_{Signal\ nicht\ ok}$ werden vorzugsweise situationsabhängig und in Abhängigkeit vom aktuellen Signalwert bestimmt.

In Schritt S4 wird der Gesamtnutzen $N_{ges}$ über den Zusammenhang

$$N_{ges} = P \times N_{Signal\ ok} + (1-p) \times N_{Signal\ nicht\ ok,}$$

ermittelt. Der Wertebereich von p liegt dabei zwischen Null und Eins.

Anschließend wird im Schritt S5 überprüft, ob der Gesamtnutzen $N_{ges}$ größer als Null ist. Ist dies der Fall, so wird im Schritt S6 die Funktion aktiviert (oder auch deaktiviert). Ist der Gesamtnutzen $N_{ges}$ nicht größer als Null, so erfolgt im Schritt S7 keine Aktivierung (bzw. Deaktivierung) der Funktion.

Das dargestellte Verfahren endet beim Schritt S8.

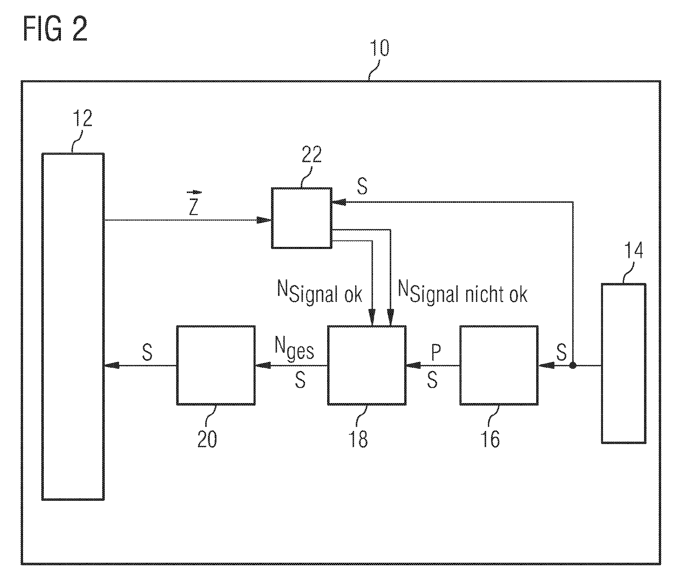

Figur 2 zeigt ein schematisches Blockschaltbild einer Ausführungsform des erfindungsgemäßen Systems. Im dargestellten Fall wird über eine Aktivierung/Deaktivierung einer Funktion eines Antriebsstranges 12 eines Kraftfahrzeugs 10 entschieden. Die Aktivierung/Deaktivierung der Funktion erfolgt dabei in Abhängigkeit von einem Signal S, das von einem Navigationssystem 14 geliefert wird. Die in Navigationssystemen verwendeten Karteninformationen sind in den meisten Fällen wesentlich unsicherer als andere Signalquellen. Eine Zuverlässigkeitsbetrachtung für das von dem Navigationssystem 14 gelieferte Signal S ist daher besonders vorteilhaft. Gemäß der Darstellung von Figur 2 bestimmen erste Mittel 16 die Zuverlässigkeit p des Signals S und führen diese Zuverlässigkeit p zweiten Mitteln 18 zu, die zur Bestimmung des Gesamtnutzens $N_{ges}$ vorgesehen sind. Das Signal S wird dabei ebenfalls übertragen. Den zweiten Mitteln 18 wird weiterhin der Nutzen $N_{Signal\ ok}$ und der Schaden $N_{Signal\ nicht\ ok}$ zugeführt, wobei diese Werte von vierten Mitteln 22 bestimmt werden. Im dargestellten Fall bestimmen die vierten Mittel 22 den Nutzen $N_{Signal\ ok}$ und den Schaden $N_{Signal\ nicht\ ok}$ in Abhängigkeit vom Signal S selbst sowie in Abhängigkeit von einem Zustandsvektor Z, der einen momentanen Zustand des Antriebsstranges 12 angibt. Die zweiten Mittel 18 bestimmen den Gesamtnutzen $N_{ges}$ über den Zusammenhang:

$$N_{ges} = P \times N_{Signal\ ok} + (1-p) \times N_{Signal\ nicht\ ok.}$$

Weiterhin sind dritte Mittel 20 vorgesehen, die das Signal S nur dann an den Antriebsstrang 12 zur Aktivierung/Deaktivierung der Funktion weiterleiten, wenn der Gesamtnutzen $N_{ges}$ größer als Null ist. Die ersten bis vierten Mittel 16, 18, 20, 22 können durch dem Fachmann geläufige analoge und/oder digitale Schaltungen verwirklicht werden, insbesondere zumindest teilweise auch durch mit entsprechender Software zusammenwirkende Hardware. Weiterhin können die ersten bis vierten Mittel 16, 18, 20, 22 zum Teil oder vollständig kombiniert werden.

Grundsätzlich ist die vorliegende Erfindung in allen Fällen anwendbar, in denen eine Nutzen/Schaden-Abwägung vor einer Aktivierung/Deaktivierung einer Funktion sinnvoll ist. Dies ist insbesondere bei allen sicherheitskritischen Anwendungen der Fall, beispielsweise im Zusammenhang mit der Fahrzeugtechnik. Besonders bevorzugt wird die Anwendung der Erfindung in Fällen, bei denen Navigationssysteme als Informations- beziehungsweise Signalquelle dienen, wobei derartige Signale beispielsweise zur Antriebsstrangsteuerung beziehungsweise -regelung verwendet werden können.

Die Erfindung lässt sich wie folgt zusammenfassen:

Ein Signal oder eine Information kann vielfach nur dann sinnvoll verwertet werden, wenn dessen/deren Zuverlässigkeit bekannt ist. Beispielsweise sollten sicherheitskritische Funktionen, wie die Steuerung/Regelung des Antriebsstranges eines Kraftfahrzeugs, nur aufgrund sehr sicherer Informationen aktiv werden.

Erfindungsgemäß ist daher vorgesehen, eine Funktion nur dann zu aktivieren/deaktivieren, wenn der zu erwartende Gesamtnutzen $N_{ges}$ größer als Null ist. Der Gasamtnutzen wird dabei über den folgenden Zusammenhang ermittelt:

$$N_{ges} = P \times N_{Signal\ ok} + (1-p) \times N_{Signal\ nicht\ ok,}$$

wobei $0 \leq p \leq 1$ die abgeschätzte Wahrscheinlichkeit dafür ist, dass das verwendete Signal korrekt ist, $N_{Signal\ ok} > 0$ der Nutzen durch die aktivierte korrekt funktionierende Funktion ist und $N_{Signal\ nicht\ ok} < 0$ der Schaden durch die fehlerhaft arbeitende Funktion ist.

**Patentansprüche**

1. Verfahren zum Aktivieren/Deaktivieren einer Funktion, insbesondere einer Funktion eines Antriebsstranges eines Kraftfahrzeuges, in Abhängigkeit von zumindest einem Signal (S), insbesondere einem von einem Navigationssystem gelieferten Signal (S),
**dadurch gekennzeichnet,**
**dass** es die folgenden Schritte umfasst:

a) Bestimmen der Zuverlässigkeit (p) des Signals (S) und/oder einer Untermenge des Signals (S);

b) Bestimmen eines bei der Aktivierung der Funktion zu erwartenden Gesamtnutzens ($N_{ges}$) in Abhängigkeit von der Zuverlässigkeit (p) des Signals (S) oder der Untermenge des Signals (S); und

c) Aktivieren/Deaktivieren der Funktion nur dann, wenn der zu erwartende Gesamtnutzen ($N_{ges}$)größer als ein vorgegebener Schwellenwert ist, insbesondere größer als Null.

2. Bestimmen nach Anspruch 1,
**dadurch gekennzeichnet,**
**dass** in die Bestimmung der Zuverlässigkeit (p) des Signals (S) die Zuverlässigkeit zumindest von Abschnitten des Übertragungsweges von der Quelle des Signals (S) bis zum Auswertungsort eingeht.

3. Bestimmung nach Anspruch 1 oder 2,
**dadurch gekennzeichnet,**
**dass** der Gesamtnutzen ($N_{ges}$) über den folgenden Zusammenhang bestimmt wird:

$$N_{ges} = p \times N_{Signal\ ok} + (1-p) \times N_{Signal\ nicht\ ok,}$$

wobei $N_{ges}$ der Gesamtnutzen, p die Zuverlässigkeit des Signals (S) oder der Untermenge des Signals (S), $N_{Signal\ ok}$ ein Maß für einen mit der zu Recht ausgelösten Funktion verbundene Nutzen und $N_{Signal\ nicht\ ok}$ ein Maß für einen mit der zu Unrecht ausgelösten Funktion verbundenen Schaden ist.

4. Bestimmung nach Anspruch 3,
**dadurch gekennzeichnet,**
**dass** der Nutzen $N_{Signal\ ok}$ und/oder der Schaden $N_{Signal\ nicht\ ok}$ situations- und/oder signalabhängig bestimmt wird.

5. Bestimmung nach einem der vorangehenden Ansprüche,
**dadurch gekennzeichnet,**
**dass** die Zuverlässigkeit (p) ein Produkt aus Einzelzuverlässigkeiten ($p_1$ x $p_2$ x ... x $p_n$) einer Mehrzahl (n) von Signalen ist.

6. Bestimmung nach einem der vorangehenden Ansprüche,
**dadurch gekennzeichnet,**

**dass** die Zuverlässigkeit (p) mit dem Signal (S) übertragen wird.

7. System zum Aktivieren/Deaktivieren einer Funktion, insbesondere einer Funktion eines Antriebsstranges (12) eines Kraftfahrzeuges (10), in Abhängigkeit von zumindest einem Signal (S), insbesondere einem von einem Navigationssystem (14) gelieferten Signal (S),
**dadurch gekennzeichnet,**
**dass** es die folgenden Bestandteile umfasst:

- erste Mittel (16) zum Bestimmen der Zuverlässigkeit (p) des Signals (S) und/oder einer Untermenge des Signals (S);

- zweite Mittel (18) zum Bestimmen eines bei der Aktivierung der Funktion zu erwartenden Gesamtnutzens ($N_{ges}$) in Abhängigkeit von der Zuverlässigkeit (p) des Signals (S) oder der Untermenge des Signals (S); und

- dritte Mittel (20) zum Aktivieren/Deaktivieren der Funktion nur dann, wenn der zu erwartende Gesamtnutzen ($N_{ges}$) größer als ein vorgegebener Schwellenwert ist, insbesondere größer als Null.

8. System nach Anspruch 7,
**dadurch gekennzeichnet,**
**dass** die ersten Mittel (16) bei der Bestimmung der Zuverlässigkeit (p) des Signals (S) die Zuverlässigkeit zumindest von Abschnitten des Übertragungsweges von der Quelle des Signals (S) bis zum Auswertungsort berücksichtigen.

9. System nach Anspruch 7 oder 8,
**dadurch gekennzeichnet,**
**dass** die zweiten Mittel (18) den Gesamtnutzen ($N_{ges}$) über den folgenden Zusammenhang bestimmen:

$$N_{ges} = P \times N_{Signal\ ok} + (1-p) \times N_{Signal\ nicht\ ok,}$$

wobei $N_{ges}$ der Gesamtnutzen, p die Zuverlässigkeit des Signals (S) oder der Untermenge des Signals (S), $N_{Signal\ ok}$ ein Maß für einen mit der zu Recht ausgelösten Funktion verbundene Nutzen und $N_{Signal\ nicht\ ok}$ ein Maß für einen mit der zu Unrecht ausgelösten Funktion verbundenen Schaden ist.

10. System nach Anspruch 9,
**dadurch gekennzeichnet,**
**dass** vierte Mittel (22) vorgesehen sind, die den Nutzen $N_{Signal\ ok}$ und/oder den Schaden $N_{Signal\ nicht\ ok}$ situations- und/oder signalabhängig bestimmen.

**11.** System nach einem der Ansprüche 7 bis 10, **dadurch gekennzeichnet,** **dass** die Zuverlässigkeit (p) ein Produkt aus Einzelzuverlässigkeiten ($p_1$ x $p_2$ x ... x $p_n$) einer Mehrzahl (n) von Signalen ist.

**12.** System nach einem der Ansprüche 7 bis 11, **dadurch gekennzeichnet,** **dass** die Zuverlässigkeit (p) mit dem Signal (S) übertragen wird.

# FIG 1

```
                    ┌─────────────────┐
                    │      Start      │──S1
                    └─────────────────┘
                             │
                             ▼
        ┌────────────────────────────────────────┐
        │ Bestimme Zuverlässigkeit p des Signals  │──S2
        └────────────────────────────────────────┘
                             │
                             ▼
   ┌──────────────────────────────────────────────────────┐
   │ Bestimme  Nutzen $N_{Signal\ ok}$ und Schaden $N_{Signal\ nicht\ ok}$ │──S3
   └──────────────────────────────────────────────────────┘
                             │
                             ▼
   ┌──────────────────────────────────────────────────────┐
   │ $N_{ges} = p \times N_{Signal\ ok} + (1-p) \times N_{Signal\ nicht\ ok}$ │──S4
   └──────────────────────────────────────────────────────┘
                             │
                             ▼
                        S5  ◇
                    ╱           ╲
                  ╱  $N_{ges} > 0$  ╲
                  ╲               ╱
         Ja         ╲           ╱        Nein
                        ◇
   S6                                      S7
    │                                       │
    ▼                                       ▼
┌──────────────────┐              ┌──────────────────────┐
│ Aktiviere Funktion│              │ Aktiviere Funktion nicht│
└──────────────────┘              └──────────────────────┘
         │                                 │
         ▼                                 ▼
            ┌─────────────────┐
            │      Ende       │──S8
            └─────────────────┘
```

FIG 2

**Europäisches**
**Patentamt**

## EUROPÄISCHER RECHERCHENBERICHT

Nummer der Anmeldung

EP 04 10 5176

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DE 197 50 338 A1 (SIEMENS AG, 80333 MUENCHEN, DE) 20. Mai 1999 (1999-05-20) * das ganze Dokument * ----- | 1,7 | G05D1/02 B60K31/00 |
| A | EP 1 225 424 A (BAYERISCHE MOTOREN WERKE AKTIENGESELLSCHAFT) 24. Juli 2002 (2002-07-24) * das ganze Dokument * ----- | 1,7 | |
| P,A | DE 103 07 169 A1 (DAIMLERCHRYSLER AG) 2. September 2004 (2004-09-02) * Absätze [0008] - [0018] * ----- | 1,7 | |
| A | US 2003/204299 A1 (WALDIS ANDREW ET AL) 30. Oktober 2003 (2003-10-30) * Absätze [0057] - [0076] * ----- | 1,7 | |

RECHERCHIERTE
SACHGEBIETE (Int.Cl.7)

G05D

Der vorliegende Recherchenbericht wurde für alle Patentansprüche erstellt

| Recherchenort | Abschlußdatum der Recherche | Prüfer |
|---|---|---|
| München | 20. April 2005 | Plenk, R |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 10 5176

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2005

| Im Recherchenbericht angeführtes Patentdokument | | Datum der Veröffentlichung | Mitglied(er) der Patentfamilie | | Datum der Veröffentlichung |
|---|---|---|---|---|---|
| DE 19750338 | A1 | 20-05-1999 | WO<br>DE<br>EP<br>US | 9925580 A1<br>59803147 D1<br>1028865 A1<br>6301542 B1 | 27-05-1999<br>28-03-2002<br>23-08-2000<br>09-10-2001 |
| EP 1225424 | A | 24-07-2002 | DE<br>EP | 10101982 A1<br>1225424 A2 | 25-07-2002<br>24-07-2002 |
| DE 10307169 | A1 | 02-09-2004 | WO | 2004074030 A1 | 02-09-2004 |
| US 2003204299 | A1 | 30-10-2003 | KEINE | | |

EPO FORM P0461

Für nähere Einzelheiten zu diesem Anhang : siehe Amtsblatt des Europäischen Patentamts, Nr.12/82